# EUROPEAN PATENT APPLICATION

(11) **EP 4 796 579 A1**
(43) Date of publication of application: **26.08.2026**
(21) Application number: 26158427.0
(22) Date of filing: 13.02.2026
(51) Int. Cl.: C08J 9/32, B29C 70/66, C08J 9/224, C08J 9/236, B29C 44/44

(54) **SYNTACTIC FOAM CONTAINING REINFORCED LARGE INCLUSIONS**

(30) Priority: 20.02.2025 US 202519058746
(71) Applicant: The Boeing Company, Arlington, VA 22202 (US)
(72) Inventor: VAN BUSKIRK, Caleb G., ARLINGTON, 22202 (US); GROSS, Adam F., ARLINGTON, 22202 (US); WILENSKI, Mark S., ARLINGTON, 22202 (US); GREGERSEN, Kimberly-Alice D., ARLINGTON, 22202 (US)
(74) Representative: Plasseraud IP

(57) **Abstract**

A syntactic foam is comprised of a polymer infusing matrix, a plurality of polymer beads or matrix cavities, and a plurality of interstitial microspheres. The polymer beads and matrix cavities have a width of 0.5-50 mm and are distributed throughout the infusing matrix. Each of the polymer beads or matrix cavities is surrounded by a polymer reinforcing binder containing bead-covering microspheres, and each of the matrix cavities is partially occupied by a polymer particle. The interstitial microspheres are distributed within the infusing matrix amongst the polymer beads or matrix cavities. The bead-covering microspheres have a size distribution of ±20 um or less.

## Description

### FIELD

The present disclosure relates generally to buoyancy materials and, more specifically, to a syntactic foam containing reinforced large inclusions.

### BACKGROUND

Subsea vessels such as unmanned undersea vehicles use buoyancy material to maintain stability at different depths. Buoyancy material is also used in subsea packages such as cabled observatory nodes and unattended sensors to improve deployment efficiency and allow the subsea packages to remain submerged at specific depths.

Many subsea platforms face volume constraints due to shipping or operational requirements. Such volume constraints reduce the available space for buoyancy materials. Consequently, the buoyancy material must be designed to fit within small and irregularly shaped pockets within the subsea platform. As a result, a large number of uniquely shaped buoyancy parts are required to meet buoyancy requirements.

Syntactic foam is commonly used as a buoyancy material in a variety of subsea platforms due to its volume efficient buoyant force. In this regard, syntactic foam provides substantial buoyant force for a relatively small volume, and can be configured to resist the hydrostatic pressures associated with the depths of subsea platforms. For example, commercially available syntactic foam systems are capable of withstanding hydrostatic pressures of greater than 4500 psi. However, such foam systems have relatively high densities (e.g., greater than 0.40 g/cm³), which increases the operational weight of the subsea platform.

In view of the foregoing, there exists a need in the art for a buoyancy material that has a relatively high hydrostatic crush strength and a relatively low density for meeting buoyancy requirements of subsea applications.

### SUMMARY

The above-noted needs associated with buoyancy materials are addressed by the present disclosure which provides a syntactic foam as laid out in the appended claims.

Also disclosed is a composition for a syntactic foam as laid out in the appended claims.

Also disclosed is a method of manufacturing a syntactic foam as laid out in the appended claims.

The features, functions, and advantages that have been discussed can be achieved independently in various versions of the disclosure or may be combined in yet other versions, further details of which can be seen with reference to the following description and drawings.

### BRIEF DESCRIPTION OF THE DRAWINGS

The disclosure can be better understood with reference to the following detailed description taken in conjunction with the accompanying drawings which are not necessarily drawn to scale. The drawings are examples and not meant as limitations on the description or the claims.
Figure 1 shows an example of an unmanned undersea vehicle containing syntactic foam as a buoyancy material;
Figure 2 is a sectional view of an example syntactic foam taken along line 2-2 of Figure 1;
Figure 3 is a magnified view of a portion of an example syntactic foam, and which is comprised of an interstitial matrix containing a plurality of interstitial microspheres, and further including a plurality of reinforced polymer beads (i.e., large inclusions), each comprising a polymer bead surrounded by a polymer reinforcing binder containing a plurality of bead-covering microspheres;
Figure 4 is a magnified view of one of the reinforced polymer beads in the interstitial matrix of Figure 3, and illustrating the internal structure of the polymer bead surrounded by the polymer reinforcing binder containing the bead-covering microspheres;
Figure 5 is a magnified view of a portion of the reinforced polymer bead of Figure 4;
Figure 6 is a magnified view of an example of a polymer bead in the form of an expanded polystyrene bead;
Figure 7 is a magnified view of an example of a hollow microsphere;
Figure 8 is a sectional view of the hollow microsphere of Figure 7;
Figure 9 is a chart showing the isostatic crush strength of two types of example hollow glass microspheres each having several different size distributions, and also showing the isostatic crush strength of bulk quantities of the same two types of hollow glass microspheres;
Figure 10 is a magnified view of a portion of an example syntactic foam similar to the example of Figure 3, but containing a plurality of matrix cavities instead of polymer beads, and each matrix cavity contains a polymer particle resulting from the shrinkage of the polymer bead during curing or solidification of the infusing matrix;
Figure 11 is a magnified view of one of the matrix cavities in the interstitial matrix of Figure 10, and illustrating the polymer particle contained within;
Figure 12 is a magnified view of a portion of the matrix cavity of Figure 11;
Figure 13 is a table of six different example compositions of syntactic foam having different combinations of sieved or unsieved bead-covering microspheres and interstitial microspheres, and listing the density, hydrostatic crush strength, and service depth for each syntactic foam composition;
Figure 14 is a plot of hydrostatic crush strength versus density for each example syntactic foam composition listed in Figure 14;
Figure 15 is a plot of water volume displacement as a function of hydrostatic pressure during testing of the hydrostatic crush strength of an example syntactic foam test specimen;
Figure 16 is a flowchart of operations included in an example method of manufacturing syntactic foam;
Figure 17 is a schematic view of a quantity of example polymer beads as they are poured into an angled tumbler;
Figure 18 is a magnified illustration of a portion of the polymer beads in the angled tumbler of Figure 17;
Figure 19 is a schematic view of an example polymer reinforcing binder as it is poured into the angled tumbler to coat the polymer beads and thereby form example binder-coated polymer beads;
Figure 20 is a magnified illustration of a portion of the binder-coated polymer beads of Figure 19;
Figure 21 is a schematic view of the sieving of a bulk quantity of example bead-covering microspheres using one of at least two mesh sieves required to obtain a sorted quantity of bead-covering microspheres having a desired particle size distribution (e.g., no greater than ±20 µm);
Figure 22 is a schematic view of the sorted quantity of example hollow microspheres as they are added to the bead-covering microspheres while rotating the tumbler until conglomerates of the binder-coated polymer beads physically break up into individual example reinforced polymer beads;
Figure 23 is a magnified illustration of a portion of the individual reinforced polymer beads of Figure 22;
Figure 24 is a schematic view of the reinforced polymer beads in a sealed container during tumbling by a tumbling machine for consolidating the reinforcing binder and the bead-covering microspheres surrounding the polymer beads;
Figure 25 is a magnified illustration of a portion of the reinforced polymer beads of Figure 24;
Figure 26 is a schematic view of the container of reinforced polymer beads installed in an oven for curing or solidifying the reinforcing binder;
Figure 27 is a magnified illustration of a portion of the reinforced polymer beads of Figure 26;
Figure 28 is a schematic view of the container of reinforced polymer beads of Figure 27 as they are poured into a mold mounted on a mechanical vibrator;
Figure 29 is a schematic view of the sieving of a bulk quantity of example interstitial microspheres similar to the arrangement shown in Figure 21;
Figure 30 is a schematic view of the sorted quantity of interstitial microspheres as they are added to the reinforced polymer beads in the mold to form an example powder bed;
Figure 31 is a magnified illustration of a portion of the powder bed of Figure 30 showing the interstitial microspheres in the interstices between the reinforced polymer beads;
Figure 32 is an exploded schematic view of an example mold assembly comprising a porous frit configured to be placed over the mold top side and the mold bottom side;
Figure 33 is an assembled schematic view of the mold assembly of Figure 32;
Figure 34 is a schematic view of an example manufacturing system comprising a vacuum pump fluidically coupled to the mold top side and having a resin container fluidically coupled to the mold bottom side and containing interstitial matrix;
Figure 35 is a schematic view of the example manufacturing system during activation of the vacuum pump, causing the interstitial matrix to be drawn up into the mold bottom side and infuse the powder bed in the mold;
Figure 36 is a schematic view of the mold of Figure 35 after infusion of the infusing matrix into the powder bed of reinforced polymer beads and interstitial microspheres and resulting in an example syntactic foam in a pre-cured state;
Figure 37 is a magnified illustration of a portion of the example syntactic foam of Figure 36 in the pre-cured state;
Figure 38 is a schematic view of the mold of Figure 37 installed in an oven for curing or solidifying the interstitial matrix to result in an example syntactic foam and a post-cured state;
Figure 39 is a schematic view showing the removal of the post-cured syntactic foam from the mold;
Figure 40 is a magnified view of a portion of post-cured syntactic foam of Figure 39 and illustrating the plurality of matrix cavities, each containing a polymer particle resulting from the shrinkage of the polymer bead during the curing or solidification process.

The figures shown in this disclosure represent various aspects of the versions presented, and only differences will be discussed in detail.

### DETAILED DESCRIPTION

Disclosed versions will now be described more fully hereinafter with reference to the accompanying drawings, in which some, but not all of the disclosed versions are shown. Indeed, several different versions may be provided and should not be construed as limited to the versions set forth herein. Rather, these versions are provided so that this disclosure will be thorough and fully convey the scope of the disclosure to those skilled in the art.

This specification includes references to "configuration" and "configurations." Instances of the phrases "configuration" and "configurations." do not necessarily refer to the same configuration. Similarly, this specification includes references to "one example" or "an example." Instances of the phrases "one example" or "an example" do not necessarily refer to the same example. Particular features, structures, or characteristics may be combined in any suitable manner consistent with this disclosure.

As used herein, "comprising" is an open-ended term, and as used in the claims, this term does not foreclose additional components, structures, or steps.

As used herein, "configured to" means various parts or components may be described or claimed as "configured to" perform a task or tasks. In such contexts, "configured to" is used to connote structure by indicating that the parts or components include structure that performs those task or tasks during operation. As such, the parts or components can be said to be configured to perform the task even when the specified part or component is not currently operational (e.g., is not on).

As used herein, an element or step recited in the singular and preceded by the word "a" or "an" should be understood as not necessarily excluding the plural of the elements or steps. As used herein, the term "and/or" includes any and all combinations of one or more of the associated listed items. As also used herein, the term "combinations thereof" includes combinations having at least one of the associated listed items, wherein the combination can further include additional, like non-listed items.

As used herein, the phrase "at least one of," when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

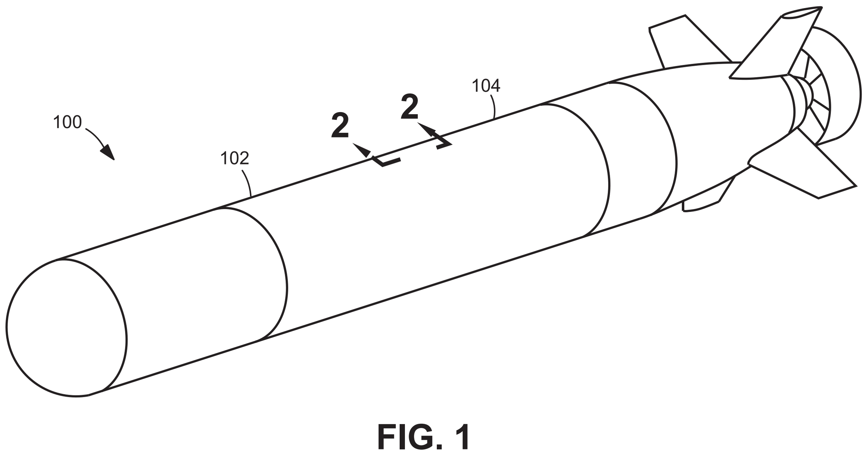

Referring now to the drawings which illustrate various examples of the disclosure, shown in Figure 1 is an unmanned undersea vehicle 100 containing syntactic foam 102. The presently-disclosed syntactic foam 102 has a relatively high hydrostatic crush strength and a relatively low density, which allows the syntactic foam 102 to efficiently meet the buoyancy requirements of subsea applications such as the unmanned undersea vehicle 100 of Figure 1. For example, the syntactic foam 102 is capable of withstanding hydrostatic pressures of greater than 4500 psi (i.e., a service depth of greater than 7500 feet) while maintaining a density of less than 0.40 g/cm³. The syntactic foam 102 can be readily formed into a foam product 104 that is shaped complementary to the interior pockets and/or exterior contours of undersea vehicles. However, the syntactic foam 102 is not limited to subsea applications, and can be implemented in any one of a variety of ground-based applications, air vehicle applications, and space-based applications.

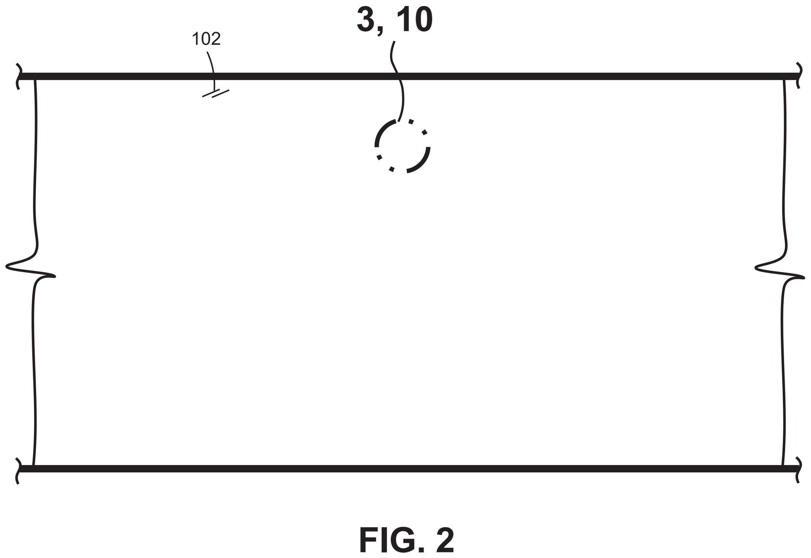

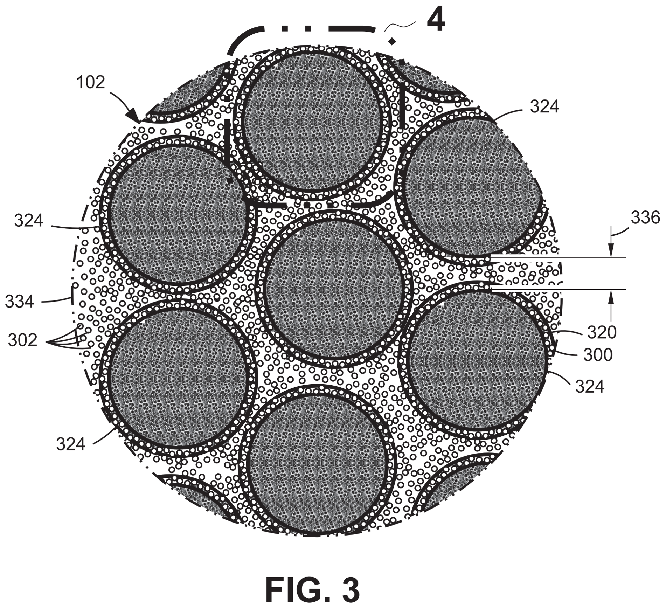

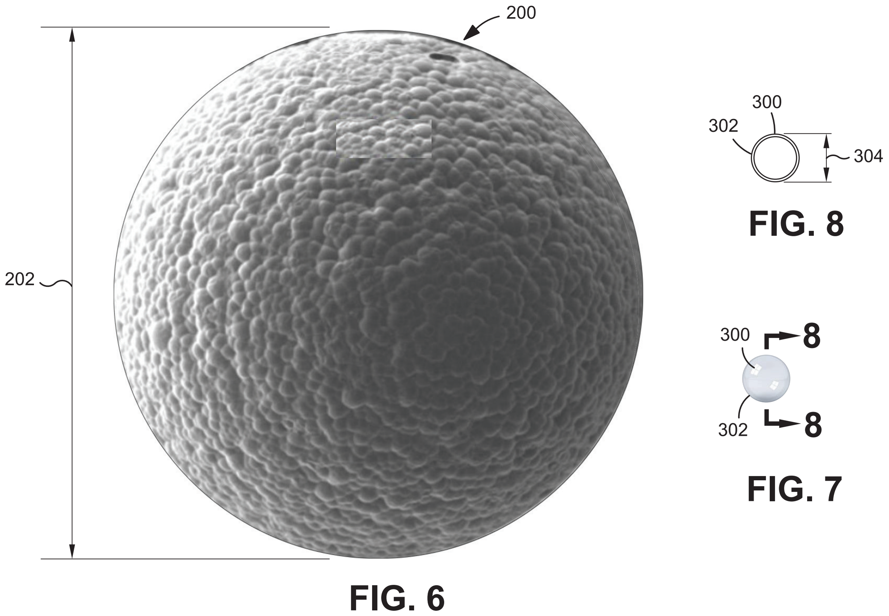

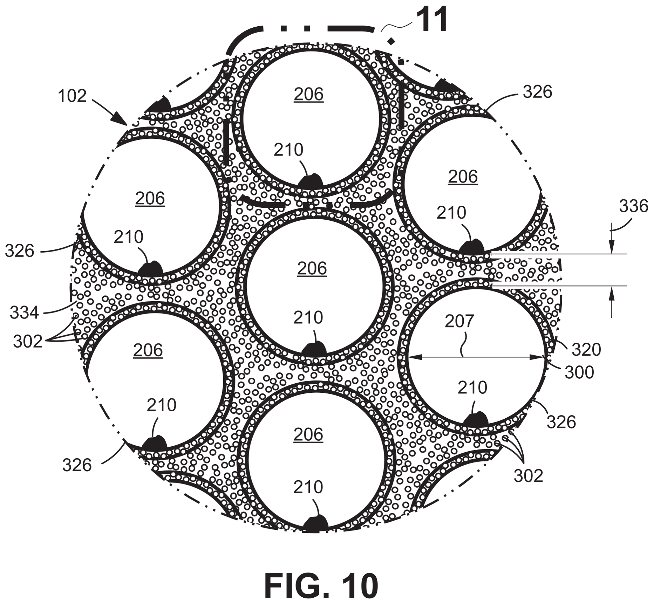

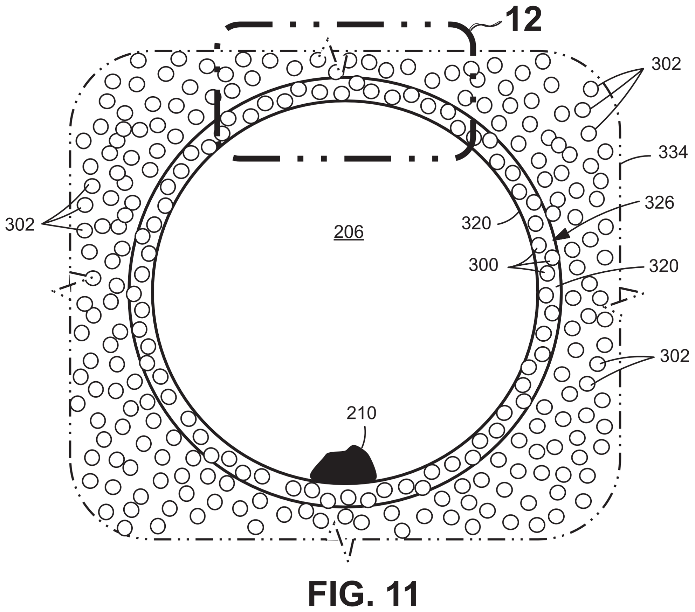

Referring to Figures 2-12, shown in Figure 2 is a sectional view of an example of the syntactic foam 102, which is comprised of a polymer infusing matrix 334 (i.e., resin), a plurality of reinforced polymer beads 324 (i.e. large inclusions - Figures 3-5) or reinforced matrix cavities 326 (Figures 10-12) distributed throughout the infusing matrix 334, and a quantity of interstitial microspheres 302 distributed within the infusing matrix 334 amongst the reinforced polymer beads 324 or reinforced matrix cavities 326. Each reinforced polymer bead 324 is comprised of a polymer bead 200 surrounded by a polymer reinforcing binder 320 (i.e., resin) containing a plurality of bead-covering microspheres 300. Each reinforced matrix cavity 326 is comprised of a matrix cavity 206 surrounded by a polymer reinforcing binder 320 containing a plurality of bead-covering microspheres 300. Each polymer bead 200 has a bead width 202 (Figure 6) of 0.5-50 millimeters (mm), and each matrix cavity 206 has a cavity width 207 (Figure 10) of 0.5-50 mm. The reinforcing binder 320 covering each polymer bead 200 or matrix cavity 206 contains at least one layer of bead-covering microspheres 300, each of which is at least partially embedded in the reinforcing binder 320.

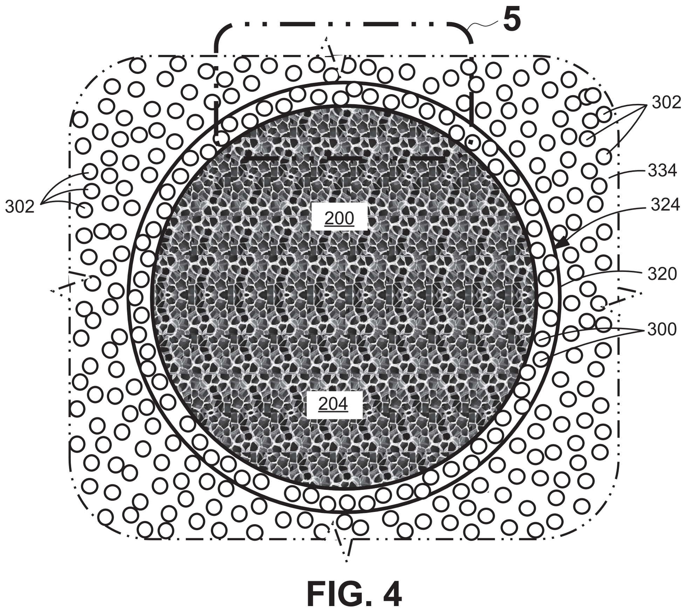

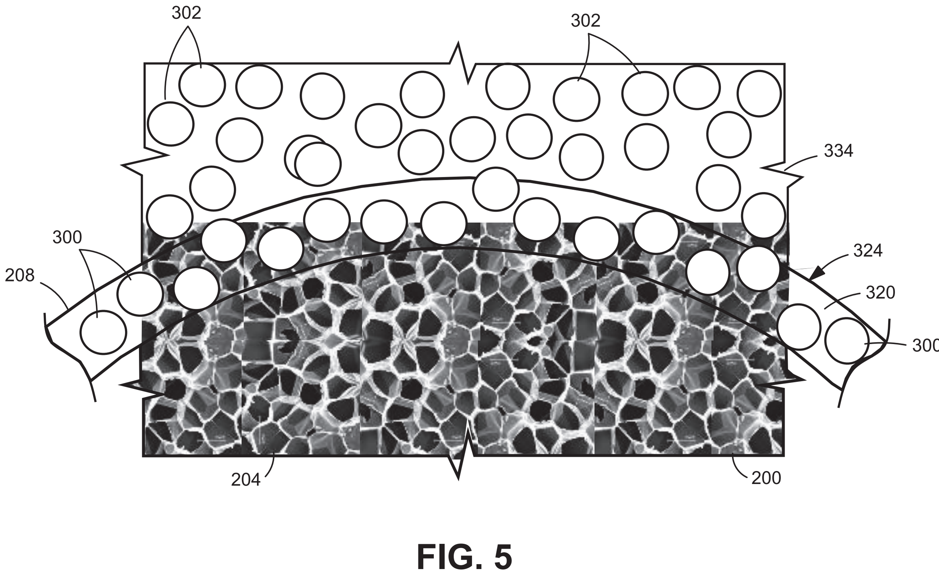

Figures 3-5 show an example of syntactic foam 102 comprised of the infusing matrix 334 containing a plurality of reinforced polymer beads 324, and a plurality of interstitial microspheres 302 distributed within the infusing matrix 334 amongst and between the reinforced polymer beads 324. Figure 4 is a magnified sectional view of one of the reinforced polymer beads 324 of Figure 3 showing the internal structure 204 of the polymer beads 200 and the reinforcing binder 320 covering the polymer beads 200 and which contains the bead-covering microspheres 300. Figure 5 is a magnified sectional view of a portion of one of the reinforced polymer beads 324 of Figure 4 showing its cellular-like internal structure 204. In addition, Figure 5 shows the bead-covering microspheres 300, the majority of which are fully embedded in the reinforcing binder 320, and several of which are partially embedded in the reinforcing binder 320. The reinforcing binder 320 bonds the bead-covering microspheres 300 to the polymer beads 200, and bonds the bead-covering microspheres 300 to each other. The infusing matrix 334 bonds the reinforced polymer beads 324 together, bonds the interstitial microspheres 302 together, and bonds the interstitial microspheres 302 to the reinforced polymer beads 324.

The reinforcing binder 320 can be a thermosetting material or a thermoplastic material. Similarly, the infusing matrix 334 can be a thermosetting material or a thermoplastic material. The infusing matrix 334 can be the same material or a different material than the reinforcing binder 320. Examples of materials for the reinforcing binder 320 and/or the infusing matrix 334 include, but are not limited to, epoxy, epoxy-amine, epoxy-anhydride, silicone, vinyl ester, polyurethane, polyurea, polyester, cyclic olefin, phenolic resin, polyimide, polybenzimidazole, and polyetherimide.

In the example of a thermosetting material, the reinforcing binder 320 and/or the infusing matrix 334 can be formed as a mixture of liquid resin and a hardener or catalyst. One example of epoxy resin is bisphenol A diglycidyl ether epoxy resin. The hardener can be any suitable polymerization initiator such as amine or alcohol hardener, and is mixed in the appropriate ratio with the resin to obtain a resin mixture that will harden or cure over time. Examples of the hardener include aliphatic polyamine hardener and cyclic polyamine hardener. Commercially available examples of two-part resin systems (i.e., resin and hardener) include DE NEEF^{™} Denepox I-40, available from GCP Applied Technologies of Alpharetta, Georgia; UltraThin2 Epoxy^{™}, available from Pace Technologies Corporation of Tucson, Arizona; and CI-SLV^{™} Super-low-viscosity Structural Injection Epoxy, available from Simpson Strong-Tie Company, Inc., of Pleasanton, California. Other examples of resin systems include RTM6^{™}, 1078-1^{™}, and RTM200^{™} resin systems available from Hexcel Corporation of Stamford, Connecticut; Cycom 823 RTM^{™} epoxy resin available from Syensqo Corporation of Brussels, Belgium; and other low viscosity infusion resins.

In further examples, the syntactic foam 102 can optionally include one or more additives (not shown) to improve manufacturability and/or performance of the syntactic foam 102. For example, expanded aluminum or carbon nanotubes (not shown) can be added to the infusing matrix 334 to carry heat away from the interior of the syntactic foam 102 during final cure. Alternatively or additionally, a wetting agent (not shown) can be added to improve wetting of the surfaces of the reinforced polymer beads 324 and the interstitial microspheres 302 to facilitate resin impregnation with the infusing matrix 334. The bead-covering microspheres 300 and/or the interstitial microspheres 302 can be treated with an adhesion promoter such as a functionalized silane to improve the bonding with the reinforcing binder 320 and/or the infusing matrix 334.

Figure 6 shows an example of a polymer bead 200 in the form of an expanded polystyrene (EPS) bead. In the presently disclosed syntactic foam 102, the polymer beads 200 are formed of a low-density thermoplastic foam material. In this regard, the polymer beads 200 may be formed of any one of a variety of thermoplastic materials including, but not limited to, expanded polystyrene foam, expanded polypropylene foam, low density polyethylene foam, polyurethane foam. In some examples of the syntactic foam 102, some of the polymer beads 200 can be formed of a first material, and a remainder of the polymer beads 200 can be formed of a second material (or a third material, etc.) different than the first material.

The polymer beads 200 can be formed of a closed-cell foam. The material of the polymer beads 200 is such that the reinforcing binder 320 does not significantly penetrate into the polymer beads 200. For example, the reinforcing binder 320 does not penetrate into each polymer bead 200 beyond a depth of more than 10 percent of the bead width 202. Similarly, the reinforcing binder 320 does not penetrate into each bead-covering microsphere beyond a depth of more than 10 percent of the microsphere diameter 304 (Figure 8). In some examples not shown, the polymer beads 200 can have a non-porous surface layer (not shown) that prevents the reinforcing binder 320 from entering the open-cell foam of the polymer beads 200 during and throughout the syntactic foam manufacturing process. Alternatively or additionally, the manufacturing process can be performed in a manner preventing the entry of reinforcing binder 320 into the polymer beads 200 at any time during the manufacturing process.

In each syntactic foam 102 configuration disclosed herein, the polymer beads 200 have a true density of less than 0.1 g/cm³. More preferably, the true density of the polymer beads 200 is less than 0.05 g/cm3, and most preferably the true density of the polymer beads 200 is between 0.02 and 0.04 g/cm³. In the present disclosure, true density is the mass of the microspheres divided by the volume occupied by the microspheres, and excluding the volume of spaces between the microspheres. As mentioned above, the polymer beads 200 have a bead width 202 (Figure 6) of 0.5-50 mm. In the present disclosure, the bead width 202 of a polymer beads 200 is a measure of its maximum width. Although the figures of the syntactic foam 102 show the polymer beads 200 in a single size, in other examples not shown, a syntactic foam 102 can have polymer beads 200 in two or more sizes distributed throughout the infusing matrix 334. For example, the syntactic foam 102 can be provided in an arrangement in which a portion (e.g., 90 percent) of the polymer beads 200 in the syntactic foam 102 have a diameter of 3 mm, and a remaining portion (e.g., 10 percent) of the polymer beads 200 in the syntactic foam 102 have a diameter of 7 mm. Alternatively or additionally, the syntactic foam 102 can be comprised of polymer beads 200 in two or more size ranges (e.g., 5.0-5.5 mm polymer beads 200 and 7.0-7.5 mm polymer beads 200)

The polymer beads 200 in the syntactic foam 102 have a generally rounded shape. For example, the polymer beads 200 in Figure 6 has a spherical shape. However, the polymer beads 200 can be provided in any one of a variety of alternative shapes, such as an elliptical shape (not shown) and/or an irregular rounded shape (not shown). Although the figures of the syntactic foam 102 show the polymer beads 200 in a single shape, the syntactic foam 102 can include polymer beads 200 having two or more different shapes.

Referring to Figures 7-8, shown are magnified views of an example of a microsphere that is representative of the bead-covering microspheres 300 and the interstitial microspheres 302. In the example shown, the bead-covering microspheres 300 and the interstitial microspheres 302 are hollow to minimize their density. However, in other examples not shown, the bead-covering microspheres 300 and/or the interstitial microspheres 302 can be solid spheres or a combination of hollow spheres and solid spheres. In contrast to the polymer beads 200 which can have a generally rounded shape that may not necessarily be spherical, the bead-covering microspheres 300 and the interstitial microspheres 302 are spherical to provide uniformity in the microsphere diameter 304 (Figure 8). Uniformity of microsphere diameter 304 contributes to uniformity in the wall thickness 336 (e.g., Figures 3 and 10) between the polymer beads 200 or matrix cavities 206 of the cured syntactic foam 102. Uniformity of wall thickness 336 has a significant effect on the strength efficiency of the syntactic foam 102. In this regard, the shells 208 (i.e., reinforcing binder 320 containing bead-covering microspheres 300) surrounding the polymer beads 200 or matrix cavities 206 set the minimum distance (i.e., the wall thickness 336) between the matrix cavities 206 as a means to minimize stress concentrations in the syntactic foam 102 caused by the matrix cavities 206.

The bead-covering microspheres 300 and/or the interstitial microspheres 302 have a density of less than 0.6 g/cm³, and preferably less than 0.4 g/ cm³. The bead-covering microspheres 300 and the interstitial microspheres 302 are comprised of glass (e.g., silica), ceramic, polymer, or other suitable material. The bead-covering microspheres 300 can be formed of the same material as the interstitial microspheres 302, or a different material than the interstitial microspheres 302. Alternatively or additionally, the bead-covering microspheres 300 can be provided in the same size or a different size than the interstitial microspheres 302.

In one example, the bead-covering microspheres 300 and the interstitial microspheres 302 are hollow glass microspheres (HGMS) such as S38 HGMS and S38HS HGMS commercially available from the 3M Company of St. Paul, Minnesota. S38 HGMS and S38HS HGMS are made of soda-lime borosilicate glass and have a bulk density of 0.38 g/cm³. S38 HGMS have a crush strength of 4,000 psi, while S38HS HGMS have a crush strength of 5,500 psi. K25 HGMS is another example of hollow glass microspheres available from the 3M Company that can be used as the bead-covering microspheres 300 and/or the interstitial microspheres 302. K25 HGMS are made of soda-lime borosilicate glass and have a bulk density of 0.25 g/cm³ and a crush strength of 750 psi. In another example of hollow glass microspheres, iM16K are available from the 3M Company and are made of soda-lime borosilicate glass and have a bulk density of 0.46 g/cm³, a crush strength of 16,000 psi, and a relatively small microsphere diameter 304 (e.g., 10-20 um) as compared to the larger diameter S38 HGMS (20-100 um) and K25 HGMS (20-100 um).

In any one or more of the syntactic foam 102 examples disclosed herein, the largest of the interstitial microspheres 302 and/or the largest of the bead-covering microspheres 300 can be at least 7 times smaller than the smallest of the polymer beads 200 or matrix cavities 206. In a specific example, the largest of the interstitial microspheres 302 and/or the largest of the bead-covering microspheres 300 can be at least 10 times smaller than the smallest of the polymer beads 200 or matrix cavities 206. As shown in Figure 7, the size of the bead-covering microspheres 300 and interstitial microspheres 302 refers to the microsphere diameter 304. In the presently disclosed syntactic foam 102, the bead-covering microspheres 300 and/or the interstitial microspheres 302 have a microsphere diameter 304 of 10-110 microns (um).

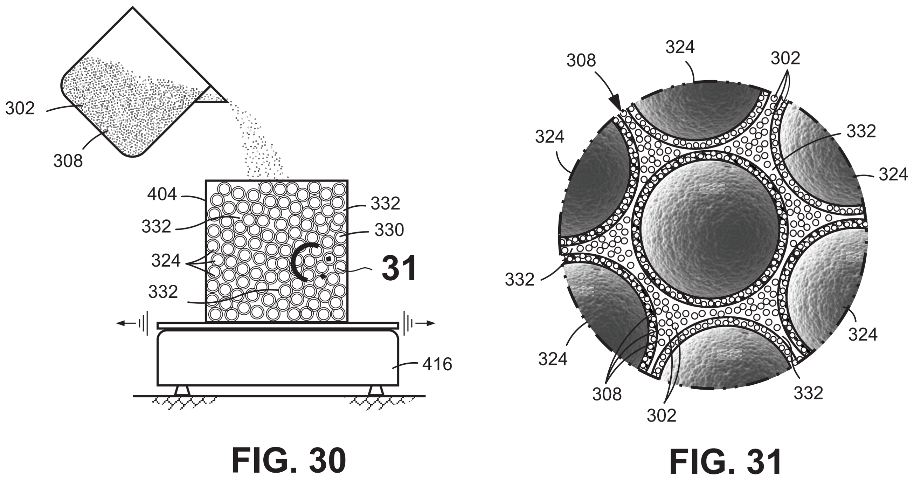

The relatively small size of the bead-covering microspheres 300 minimizes the thickness of the reinforcing binder 320 that covers the polymer beads 200. The main purpose of the bead-covering microspheres 300 is to allow the reinforced polymer beads 324 to be separated from each other and individually handled during the manufacturing process, as described below. The large size ratio (e.g., 7:1, 10:1, or larger) of the polymer beads 200 relative to the interstitial microspheres 302 enhances their ability to flow through a powder bed 330 of the reinforced polymer beads 324 and fill the interstices 332 between the reinforced polymer beads 324 as shown in Figures 30-31 and described in greater detail below.

Notably, in each syntactic foam 102 example disclosed herein, the bead-covering microspheres 300 surrounding the polymer beads 200 or matrix cavities 206 have a size distribution of ±20 microns (um) or less. In addition to the bead-covering microspheres 300, the interstitial microspheres 302 can also have a size distribution of ±20 um or less. In the present disclosure, size distribution refers to the percentage of microspheres whose diameters fall within a specified size range. For example, the syntactic foam 102 can be provided in a configuration in which at least 70 percent of the bead-covering microspheres 300 and/or at least 70 percent of the interstitial microspheres 302 have a microsphere diameter 304 in a size range of ±20 um (e.g., a microsphere diameter 304 of 40-80 um), and the remaining 30 or less percent have a microsphere diameter 304 that is outside of the size range (e.g., smaller than 40 um or larger than 80 um). In another example, the syntactic foam 102 can be provided in a configuration in which at least 90 percent of the bead-covering microspheres 300 and/or interstitial microspheres 302 have a size range of ±20 um. In still another example, at least 95 percent of the bead-covering microspheres 300 and/or interstitial microspheres 302 have a size range of ±20 um. In a still further example, at least 99 percent of the bead-covering microspheres 300 and/or interstitial microspheres 302 have a size range of ±20 um.

In some examples of the syntactic foam 102, the size distribution of the bead-covering microspheres 300 and/or the size distribution of the interstitial microspheres 302 is no greater than ±10 um. For example, the syntactic foam 102 can be provided in a configuration in which the microsphere diameters 304 of at least 70 percent of the bead-covering microspheres 300 and/or interstitial microspheres 302 have a size range of ±10 um (e.g., a microsphere diameter 304 of 43-63 um). In another example, the syntactic foam 102 can be provided in a configuration in which at least 90 percent of the bead-covering microspheres 300 and/or interstitial microspheres 302 have a size range of ±10 um. In still another example, at least 95 percent of the bead-covering microspheres 300 and/or interstitial microspheres 302 have a size range of ±10 um. In a still further example, at least 99 percent of the bead-covering microspheres 300 and/or interstitial microspheres 302 have a size range of ±10 um.

As mentioned above, the relatively narrow size distribution of the bead-covering microspheres 300 and/or interstitial microspheres 302 results in a syntactic foam 102 having a relatively high hydrostatic crush strength at a relatively low density. For example, the presently-disclosed syntactic foam 102 can be manufactured to provide a crush strength of greater than 3000 psi at a density of 0.34-0.38 g/cm³. The relatively high hydrostatic crush strength of the syntactic foam 102 is due in part to the isostatic crush strength of the microspheres, which is a function of their density and size (i.e., microsphere diameter 304). In general, the density and isostatic crush strength of the microspheres increases with decreasing size.

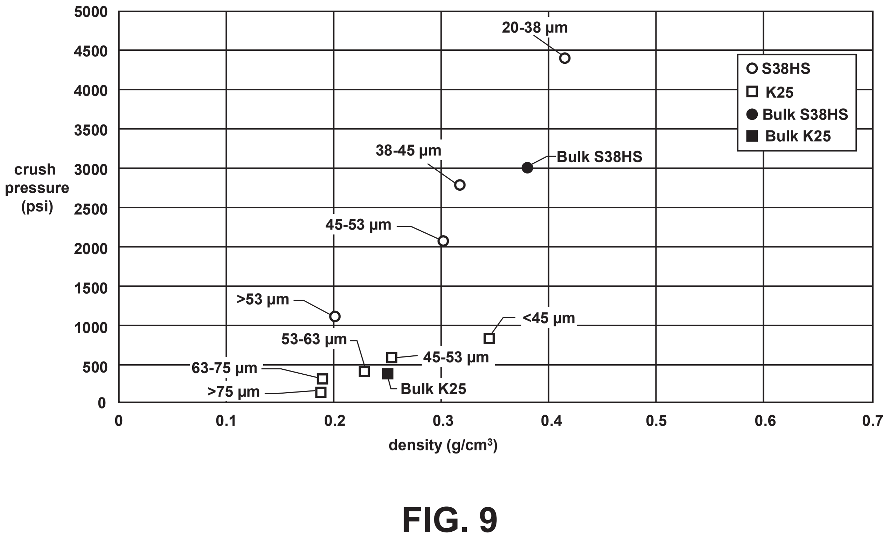

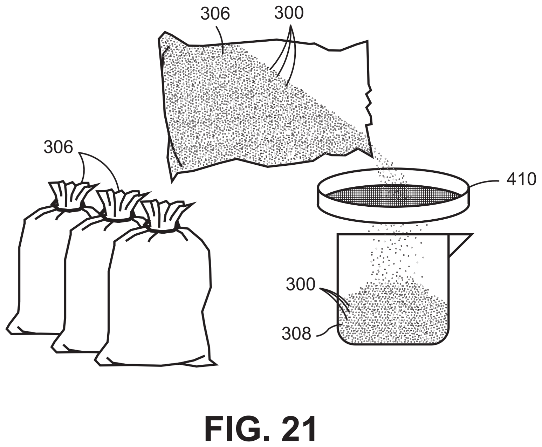

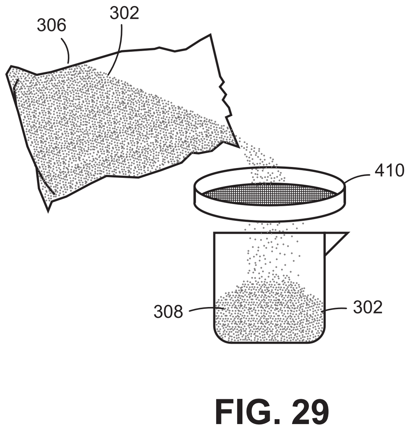

For example, Figure 9 is a chart of the properties of the above-described commercially available S38HS and K25 hollow glass microspheres in several different size distributions. The size distributions were obtained by sieving bulk quantities of S38HS and K25 hollow glass microspheres in 10 um increments from 10-63 um using stainless steel mesh sieves 410 (e.g., Figures 21 and 29) as described below. Each increment was characterized by isostatic crush strength and density. As shown in Figure 9, the K25 hollow glass microspheres in the 63-75 um size range have a density of 0.19 g/cm³ and an isostatic crush strength of approximately 300 psi. In contrast, smaller K25 hollow glass microspheres in the 45-53 um size range have a density of 0.25 g/cm³ and an isostatic crush strength of approximately 600 psi, and sub-45 um K25 hollow glass microspheres have a density of 0.34 g/cm³ and an isostatic crush strength of approximately 800 psi. Notably, the isostatic crush strength of sub-53 um K25 hollow glass microspheres is higher than the isostatic crush strength (400 psi, as-tested) of bulk quantities of K25 hollow glass microspheres, which have a relatively large size range of 20-100 um and an average diameter of 40 um.

Referring still to Figure 9, shown are the properties of S38HS hollow glass microspheres in the 45-53 um size range, which have a density of 0.30 g/cm³ and an isostatic crush strength of approximately 2,100 psi. In contrast, smaller S38HS hollow glass microspheres in the 20-38 um size range have a density of 0.41 g/cm³ and an isostatic crush strength of approximately 4,400 psi. As shown in Figure 9, S38HS hollow glass microspheres at sizes above 38 um have a density comparable to the K25 hollow glass microspheres, but more than double the isostatic crush strength. Notably, the isostatic crush strength of 20-38 um S38HS hollow glass microspheres is higher than the isostatic crush strength (3,000 psi, as-tested) of bulk quantities of S38HS hollow glass microspheres which range in size from 20-100 um. During the development of the presently-disclosed syntactic foam 102, S38HS and iM16k hollow glass microspheres were used to demonstrate the effects of particle size (i.e., large and small microsphere diameters 304) and size distribution (e.g., ±20 um or less) on the mechanical properties of the syntactic foam 102. In the case of iM16k, particle sorting (e.g., via sieving) did not affect the density or crush strength in the range of interest.

Referring to Figures 10-12, shown in Figure 10 is a magnified view of a portion of syntactic foam 102 similar to the example of Figure 3, but instead of polymer beads 200, the syntactic foam 102 of Figure 10 contains a plurality of matrix cavities 206 distributed throughout the infusing matrix 334. As shown in Figures 10-11, each matrix cavity 206 is at least partially occupied (e.g., less than 50 percent occupied, and more likely less than 10 percent occupied) by a polymer particle 210. The polymer particle 210 is the result of shrinkage of the polymer beads 200 during the syntactic foam 102 manufacturing process. The shrinkage of the polymer beads 200 occurs when the temperature of the polymer beads 200 exceeds its glass transition temperature. Figures 3-5 illustrates the state of the syntactic foam 102 prior to final cure or solidification. However, for examples of the manufacturing process in which the glass transition temperature of the polymer beads 200 is not exceeded, Figures 3-5 also illustrate the state of the syntactic foam 102 in which the cellular-like internal structure 204 of the polymer beads 200 is preserved in the finally cured or solidified syntactic foam 102. Aside from differences regarding the internal structure 204 of the polymer beads 200, all of the characteristics described above for the syntactic foam 102 of Figures 3-5 are applicable to the syntactic foam 102 of Figures 10-12 regardless of whether or not the glass transition temperature of the polymer beads 200 is exceeded during manufacturing.

Importantly, in each configuration of the syntactic foam 102 disclosed herein, the bead-covering microspheres 300 and the interstitial microspheres 302 function as spacers to control the spacing between the polymer beads 200 during the manufacturing process, in addition to reducing the density of the syntactic foam 102. Due to the relatively small size and/or relatively narrow size distribution (e.g., ±20 um or less) of the bead-covering microspheres 300 (and optionally, of the interstitial microspheres 302), the syntactic foam 102 has a uniformly narrow wall thickness 336 between adjacent pairs of polymer beads 200 or matrix cavities 206. As shown in Figures 3 and 10, wall thickness 336 is a function of the thickness of the reinforcing binder 320 (containing bead-covering microspheres 300) covering the reinforced polymer beads 324 (Figure 3) or reinforced matrix cavities 326 (Figure 10), plus the thickness of the infusing matrix 334 (containing interstitial microspheres 302) between the reinforced polymer beads 324 or reinforced matrix cavities 326. In the present disclosure, the wall thickness 336 at the narrowest point between at least 90 percent of adjacent pairs of polymer beads 200 or matrix cavities 206 in the syntactic foam 102 is 4 to 15 times the diameter of the largest of the bead-covering microspheres 300 and the interstitial microspheres 302.

In any one of the examples of the syntactic foam 102, some of the reinforced polymer beads 324 can be in direct contact with each other, and/or some of the interstitial microspheres 302 can be in direct contact with the reinforced polymer beads 324 (Figure 3) or reinforced matrix cavities 326 (Figure 10). In any of the configurations disclosed herein, the syntactic foam 102 comprises 50-74 vol.% of the reinforced polymer beads 324 or reinforced matrix cavities 326, 20-30 vol.% of the interstitial microspheres 302, and the remainder as the infusing matrix 334. For example, a syntactic foam 102 can contain 60 vol.% of reinforced polymer beads 324 or reinforced matrix cavities 326, 20 vol.% of interstitial microspheres 302, and 20 vol.% of matrix. The above-noted 74 vol.% of reinforced polymer beads 324 or reinforced matrix cavities 326 represents controlled packing of the reinforced polymer beads 324 in a powder bed 330, while the above-noted 50 vol.% of reinforced polymer beads 324 or reinforced matrix cavities 326 represents random packing of the reinforced polymer beads 324 in the powder bed 330.

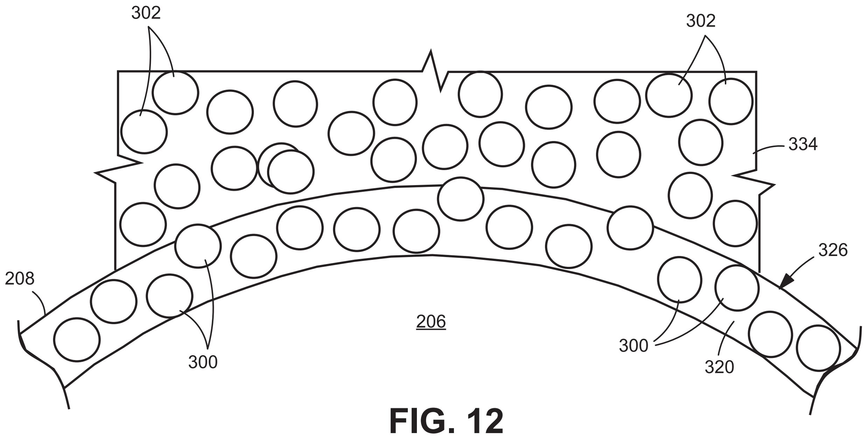

As described in greater detail below, the reinforcing binder 320 surrounding each polymer bead 200 is cured or solidified in a manner resulting in a relatively hard outer shell 208 (Figures 5 and 12), which increases the crush strength of the syntactic foam 102. Although shells typically have a high density, the use of bead-covering microspheres 300 in the reinforcing binder 320 covering the relatively large polymer beads 200 (e.g., bead diameters of 1.5-50 mm) results in a small increase (e.g., a 0.02-0.03 g/cm³ increase) in the overall density of the presently-disclosed syntactic foam 102 relative to the density of conventional syntactic foams (not shown) that use smaller polymer beads (e.g., diameters of less than 1.5 mm). As a result of the shell 208 surrounding each polymer bead 200 (Figure 3-5) or matrix cavity 206 (Figures 10-12), the presently-disclosed syntactic foam 102 achieves a 30 percent decrease in density while being 200 percent stronger than conventional syntactic foam. For example, the syntactic foam 102 can be manufactured in an arrangement that results in a density of 0.34-0.38 g/cm3 and a hydrostatic crush strength of greater than 3000 psi, as mentioned above. In another example, the syntactic foam 102 can be manufactured in an arrangement that results in a density of 0.36-0.42 g/cm³ and a hydrostatic crush strength of greater than 4000 psi.

As mentioned above, the performance improvements of the syntactic foam 102 are also due in part to the controlled size distribution of the bead-covering microspheres 300 (and optionally, the controlled size distribution of the interstitial microspheres 302). The ability to manufacture the syntactic foam 102 having such performance improvements is additionally due in part to several unique manufacturing techniques described below, such as techniques for forming the reinforced polymer beads 324 and techniques for maintaining close packing of the reinforced polymer beads 324 when distributing the interstitial microspheres 302 in a powder bed 330 of the reinforced polymer beads 324 prior to infusing with the infusing matrix 334. In addition to the performance improvements, the use of larger diameter polymer beads 200 (e.g., 1.5-50 mm) improves the manufacturability of the syntactic foam 102 (e.g., during tumbling of the polymer beads 200) relative to syntactic foams that use smaller polymer beads 200 (e.g., less than 1.5 mm).

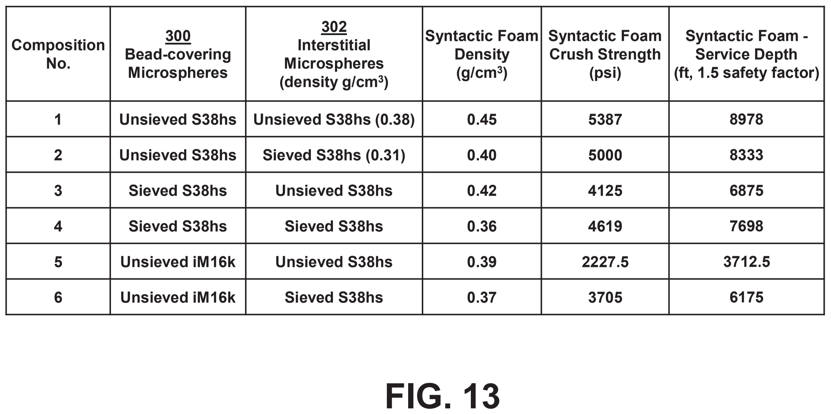

Referring now to Figure 13, shown is a table of six different compositions of syntactic foam 102 having different combinations of bead-covering microspheres 300 and interstitial microspheres 302 in the sieved and unsieved state. In the present disclosure, a composition refers to the ingredients of the syntactic foam 102. In this regard, each composition comprises a quantity of polymer beads 200, a polymer reinforcing binder 320, a quantity of bead-covering microspheres 300, a quantity of interstitial microspheres 302, and a polymer infusing matrix 334. As noted above, the polymer beads 200 are formed of any one of the above-listed thermoplastic foam materials, preferably having a true density of less than 0.1 g/cm³, and which can be provided in one or more sizes, each having a bead width 202 of 0.5-50 mm. The polymer reinforcing binder 320 comprises any one of the above-listed thermosetting or thermoplastic resins configured to coat the polymer beads 200. The bead-covering microspheres 300 are at least partially embeddable in the reinforcing binder 320 as shown in Figures 5 and 12. The reinforcing binder 320 is configured to be cured (i.e., for thermosetting resin) or solidified (i.e., for thermoplastic resin) in a manner resulting in a plurality of individually separable reinforced polymer beads 324.

In each composition, the interstitial microspheres 302 are configured to be distributed within a powder bed 330 of the reinforced polymer beads 324 in a manner filling interstices 332 (Figure 3) or voids between the reinforced polymer beads 324. In any one or more of the compositions, the largest of the interstitial microspheres 302 can be at least 7 times smaller than the smallest of the polymer beads 200. Alternatively or additionally, in any one or more of the compositions, the largest of the bead-covering microspheres 300 can be at least 7 times smaller than the smallest of the polymer beads 200. In each composition, the bead-covering microspheres 300 are provided in a size distribution of ±20 um or less. In some compositions, the interstitial microspheres 302 can also be provided in a size distribution of ±20 um or less. The microsphere diameter 304 of the bead-covering microspheres 300 and/or the interstitial microspheres 302 is preferably 10-110 um. The bead-covering microspheres 300 and the interstitial microspheres 302 can be comprised of glass (e.g., silica), ceramic, polymeric, or other material, and can have a density of less than 0.6 g/cm³

As described above, the polymer infusing matrix 334 for each composition comprises any one of the above-listed thermosetting or thermoplastic resins. The infusing matrix 334 is configured to be infused into a powder bed 330 of reinforced polymer beads 324 and interstitial microspheres 302. As described below, the polymer infusing matrix 334 is infused in such a manner that air is driven out of the powder bed 330. When infusion is complete, the interstitial microspheres 302 and the reinforced polymer beads 324 are encapsulated in the infusing matrix 334, which bonds the reinforced polymer beads 324 together, bonds the interstitial microspheres 302 together, and bonds the reinforced polymer beads 324 to the interstitial microspheres 302. As mentioned above, the infusing matrix 334 does not significantly penetrate into either the reinforced polymer beads 324 or the interstitial microspheres 302 during the manufacturing process.

For each composition, the infusing matrix 334 is configured to be cured (i.e., for thermosetting resin) or solidified (i.e., for thermoplastic resin) in a manner resulting in the syntactic foam 102. When the infusing matrix 334 is cured or solidified at a temperature that exceeds the glass transition temperature of the polymer beads 200, each polymer bead 200 may shrink in size by up to 20 or more times its original size into a polymer particle 210 (Figure 10-11), which is contained inside a matrix cavity 206 surrounded by a shell 208 comprised of the cured or solidified reinforcing binder 320 containing bead-covering microspheres 300. When the temperature of the polymer beads 200 is maintained below the glass transition temperature during the manufacturing process, the cellular-like internal structure 204 of the polymer beads 200 may be preserved, resulting in a syntactic foam 102 as shown in Figures 3-5.

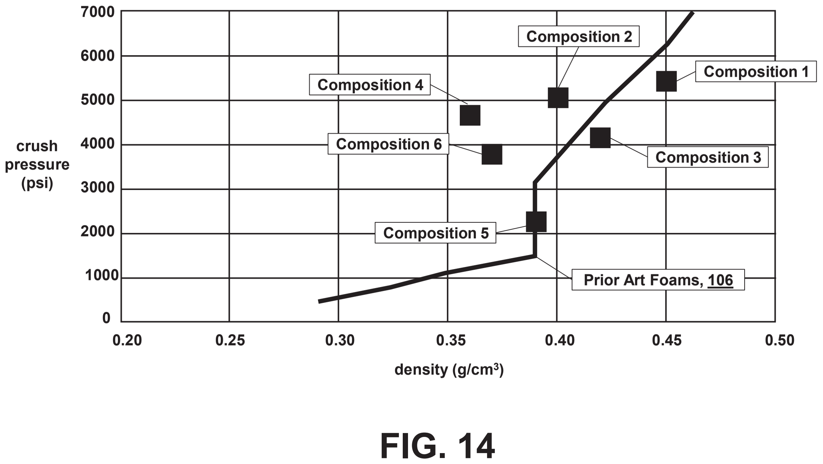

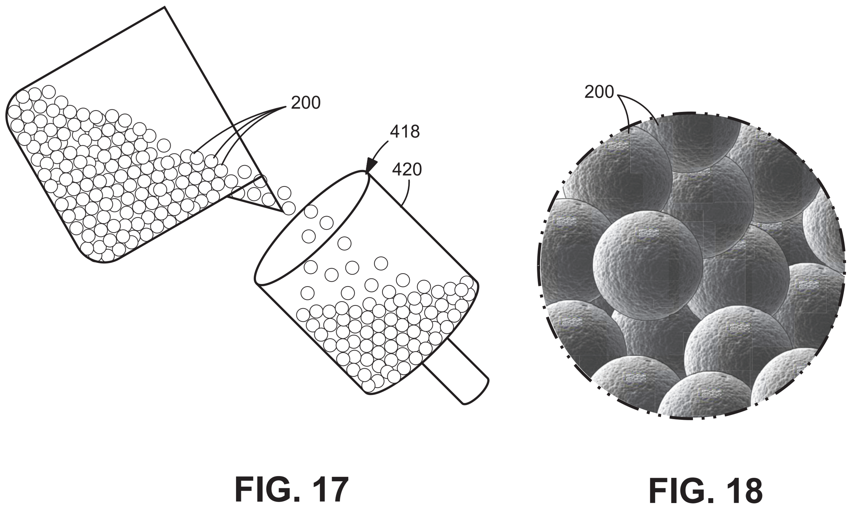

Referring to Figures 13-14, test specimens (not shown) of the six different syntactic foam 102 compositions listed in Figure 13 were manufactured in a manner described below and illustrated in Figures 17-40. The test specimens were used for demonstrating the performance improvements of the presently-disclosed syntactic foam 102 relative to prior art foams 106 (Figure 14). The six compositions were identical except for variations in the size distributions of the bead-covering microspheres 300 and the interstitial microspheres 302. More specifically, sorted (e.g., sieved) and unsorted (e.g., unsieved or bulk) quantities of the above-described S38HS HGMS and the iM16k HGMS were used as the bead-covering microspheres 300 for manufacturing the reinforced polymer beads 324. The sorted S38HS HGMS had a size distribution of ±20 um or less. For the interstitial microspheres 302, sorted (i.e., ±20 um or less) and unsorted (e.g., bulk) versions of the S38HS HGMS were used to fill the interstices 332 between the reinforced polymer beads 324 prior to infusing the powder bed 330 with infusing matrix 334.

Each of the test specimens was cored from a larger piece of syntactic foam 102. The exterior surfaces of the test specimens were sealed using epoxy resin. Each test specimen was then subjected to hydrostatic compression while water volume displacement was recorded.

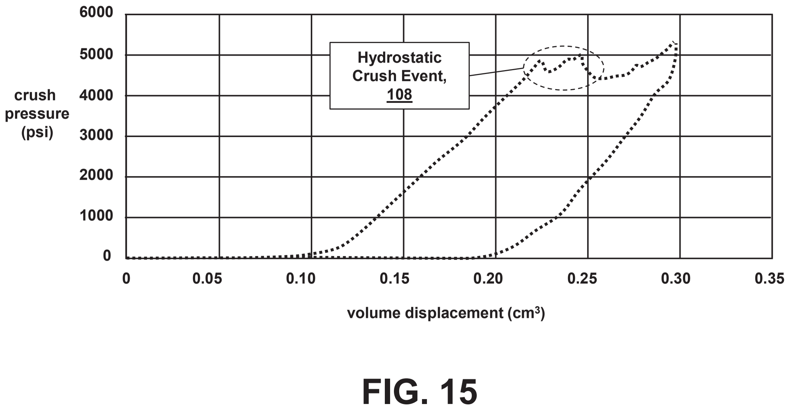

Figure 15 is a plot of water volume displacement as a function of hydrostatic pressure (i.e., hydrostatic compression) applied to the test specimens. The hydrostatic crush strength of each test specimen was characterized based on the relationship of water volume displacement to hydrostatic pressure. For example, a change in water volume displacement without a corresponding change in hydrostatic pressure indicated the occurrence of a crush event 108 in the test specimen. In Figure 15, an initial crush event 108 is represented by the initial break in the linearity of the slope, which occurs at approximately 4,700 psi. The initial crush event 108 was likely due to infiltration of a closed cell foam with the pressurized medium (i.e., water). After the initial crush event 108, the hydrostatic pressure increases by a small amount, after which another break in the slope occurs, indicating further crushing of the test specimen.

Figure 13 lists the results of the hydrostatic compression testing for each syntactic foam 102 composition, including the density, crush pressure, and corresponding underwater service depth. In the present disclosure, the service depth incorporates a safety factor of 1.5 to account for potential material imperfections, manufacturing tolerances, and/or unexpected conditions or loads on the syntactic foam. Calculation of the service depth for each composition involves determining the crush pressure (i.e., "Syntactic Foam Crush Strength" in Figure 13) of a syntactic foam test specimen (e.g., via hydrostatic compression testing). The service pressure (not shown in Fig. 13) of each composition is calculated by dividing its crush pressure by the safety factor (e.g., 1.5). Service depth (i.e., "Syntactic Foam Service Depth" in Figure 13) is determined by dividing the service pressure by the hydrostatic pressure gradient (*ρg*)*,* wherein *ρ* is the density of the medium (e.g., water), and *g* is acceleration due to gravity.

The density and crush pressure for each composition are plotted in Figure 14. As shown in Figure 13, the compositions that used sorted (e.g., sieved) quantities of S38HS HGMS for the bead-covering microspheres 300 and/or interstitial microspheres 302 were 17 percent less dense than prior art foams 106 of similar strength, and had an increase in crush strength (i.e., crush pressure) that was more than four times greater than that of foams having a similar density. Compositions that used unsorted microspheres were included to demonstrate the performance improvements provided by sorting the bead-covering microspheres 300 and interstitial microspheres 302 to a size distribution of ±20 um or less. For example, composition 4, which used sieved S38HS HGMS for the interstitial microspheres 302, had a lower density (0.36 g/cm³) and a higher crush strength (4619 psi) than composition 3, which used unsieved S38HS HGMS for the interstitial microspheres 302 and had a density of 0.42 g/cm³ and a crush strength of 4125 psi. In another example, composition 6, which used sieved S38HS HGMS for the interstitial microspheres 302, had a lower density (0.37 g/cm³) and a higher crush strength (3705 psi) than composition 5, which used unsieved S38HS HGMS for the interstitial microspheres 302 and had a density of 0.39 g/cm³ and a crush strength of 2227.5 psi.

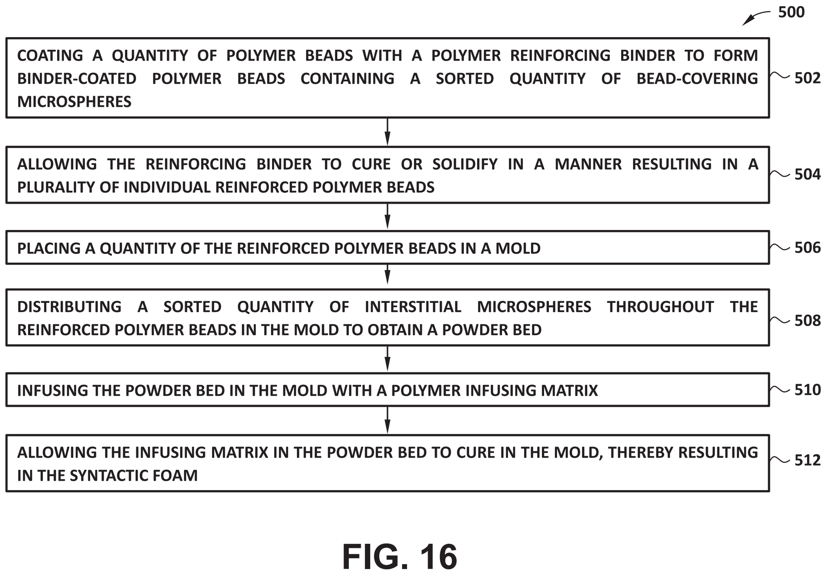

Referring now to Figure 16 with additional reference to Figures 17-40, shown in Figure 16 is a flowchart of operations included in a method 500 of manufacturing the presently-disclosed syntactic foam 102.

Referring to Figures 17-23, step 502 of the method includes coating a quantity of polymer beads 200 with a polymer reinforcing binder 320 having a sorted quantity 308 of bead-covering microspheres 300 at least partially embedded in the reinforcing binder 320. Figure 17 shows the polymer beads 200 being poured into the container 420 of the angled tumbler 418. The container 420 may be cylindrical or have another shape. The container 420 defines an axis (not shown) of rotation that is orientable at a non-vertical angle. Figure 18 is a magnified view of some of the polymer beads 200 in the angled tumbler 418. As indicated above, the polymer beads 200 may be provided in one or more sizes. However, each polymer bead 200 has a bead width 202 of 0.5-50 mm. In one example, the bead width 202 of each polymer bead 200 is larger than 1.5 mm. In another example, the bead width 202 of each polymer bead 200 is between 3.0-3.5 mm. As described above, the polymer beads 200 are formed of a low-density thermoplastic foam material, such as expanded polystyrene and/or expanded polypropylene. The polymer beads 200 have a true density of less than 0.1 g/cm³. For example, the true density of the polymer beads 200 can be less than 0.05 g/cm3, and more preferably between 0.02 and 0.04 g/cm³.

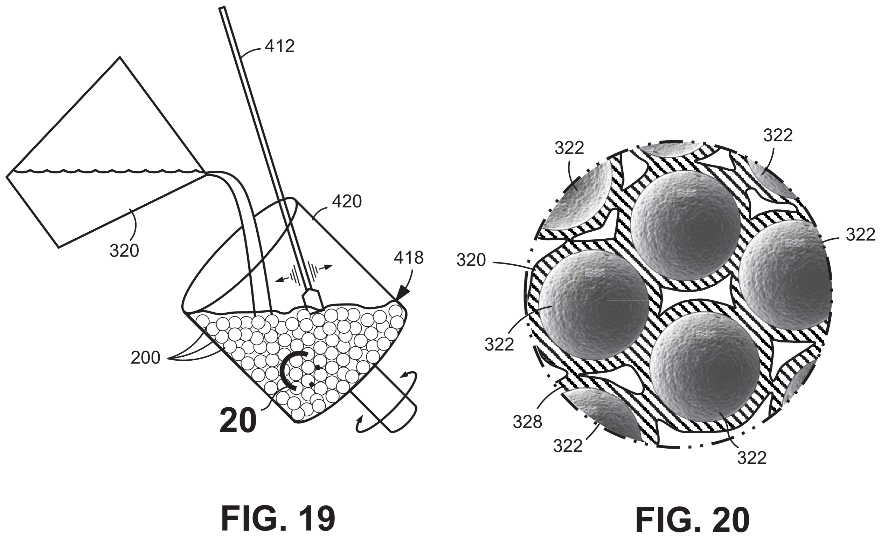

Referring to Figures 19-20, step 502 of the method includes pouring reinforcing binder 320 over the polymer beads 200 until fully coated, thereby forming binder-coated polymer beads 322. As mentioned above, the reinforcing binder 320 can be a thermosetting resin or a thermoplastic resin. In an example of a thermosetting resin, the reinforcing binder 320 can be prepared by mixing epoxy resin at a relevant ratio with a suitable hardener until homogenous. As shown in Figure 19, the reinforcing binder 320 is poured over the polymer beads 200 in the container 420 while agitating the polymer beads 200, such as by using a stir rod 412. The amount of reinforcing binder 320 poured over the polymer beads 200 is provided in a predetermined ratio (e.g., 10:1) by weight of reinforcing binder 320 to polymer beads 200. The polymer beads 200 are agitated (e.g., via the stir rod 412) until each polymer bead 200 is fully covered with the reinforcing binder 320. At this stage, the binder-coated polymer beads 322 are clumped or stuck together in a mass of large conglomerates 328 as shown in Figure 20.

Referring to Figure 21, prior to or during step 502, the method includes sieving a bulk quantity 306 of the bead-covering microspheres 300 to obtain a sorted quantity 308 of bead-covering microspheres 300 having the desired size distribution of ±20 um or less (e.g., ±10 um or less). In some examples, the largest of the bead-covering microspheres 300 is at least 7 times smaller than the smallest of the polymer beads 200. The microsphere diameter 304 (Figure 8) of the bead-covering microspheres 300 is preferably 10-110 um, as mentioned above. Figure 21 illustrates the process of sieving a bulk quantity 306 of bead-covering microspheres 300 using a mesh sieve 410. Depending on the initial size range of the bulk quantity 306 of bead-covering microspheres 300, multiple mesh sieves 410 (e.g., at least two mesh sieves) having different mesh sizes may be required during the sieving operation. As described above, the bead-covering microspheres 300 can have a density of less than 0.6 g/cm³, and can be formed of glass, ceramic, polymer, or other suitable material.

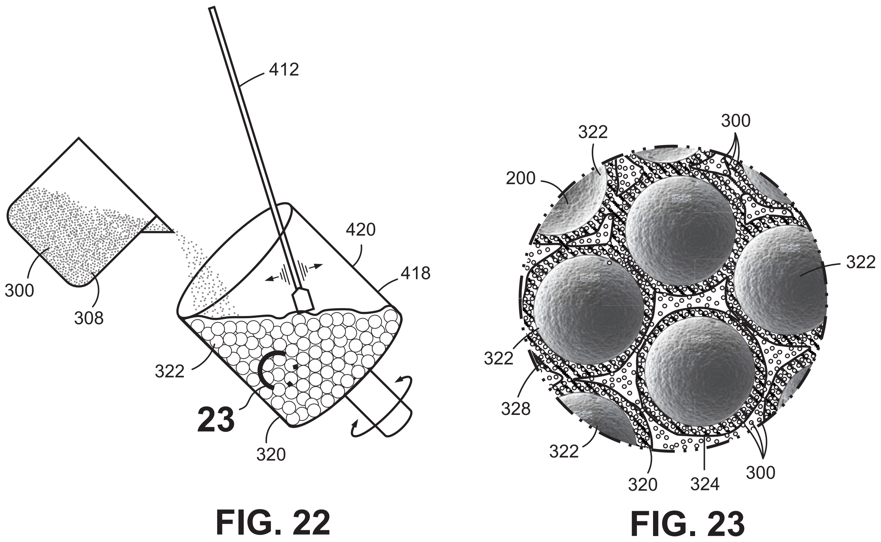

Referring to Figures 22-23, step 502 of the method includes adding the sorted quantity 308 of bead-covering microspheres 300 to the binder-coated polymer beads 322. As shown in Figure 22, the sorted quantity 308 of bead-covering microspheres 300 are added while physically agitating the polymer beads 200 and rotating the container 420 about its non-vertical axis. For example, the mixture can be manually agitated using a stir rod 412 while the container 420 is rotated. The process of adding the bead-covering microspheres 300 and physically agitating the mixture while rotating the container 420 causes the bead-covering microspheres 300 to embed within the reinforcing binder 320 covering each polymer bead 200, as shown in Figure 23. The addition of the bead-covering microspheres 300 gradually reduces cohesion among the conglomerates 328 of binder-coated polymer beads 322, causing them to physically break up or de-cake rather than staying in a clumped state. The process is continued until the binder-coated polymer beads 322 begin to tumble freely, resulting in a quantity of individual reinforced polymer beads 324. Excess bead-covering microspheres 300 are then removed from the angled tumbler 418.

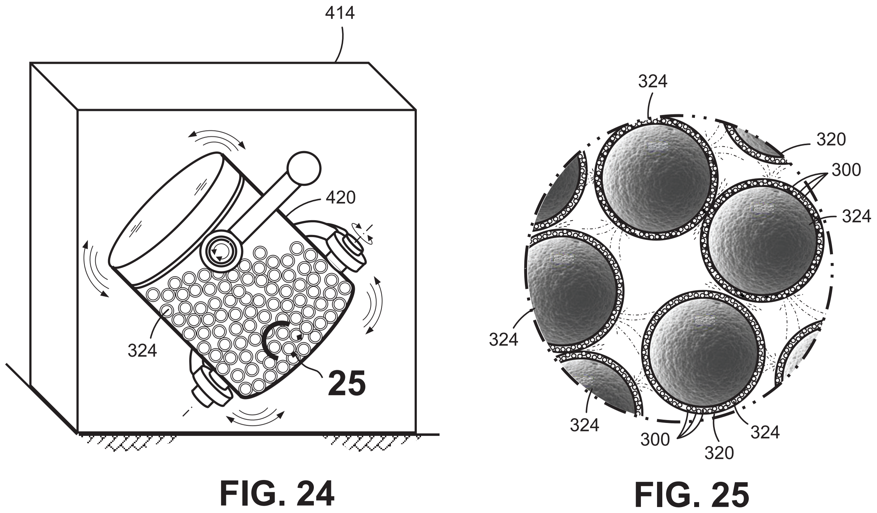

Referring to Figures 24-27, step 502 of the method includes removing the reinforced polymer beads 324 from the angled tumbler 418, and placing the reinforced polymer beads 324 in a sealed container 420. As shown in Figure 24, the sealed container 420 can be mounted on a multi-axis tumbling machine 414 configured to rotate the container 420 about multiple degrees of freedom. Step 502 includes tumbling the reinforced polymer beads 324 in the sealed container 420 for a predetermined period of time (e.g., 16 hours) at a predetermined temperature (e.g., room temperature) to consolidate the reinforcing binder 320 and bead-covering microspheres 300 surrounding the polymer beads 200. The process of tumbling the reinforced polymer beads 324 results in uniformity in the thickness of the reinforcing binder 320 covering each polymer bead 200, as shown in Figure 25.

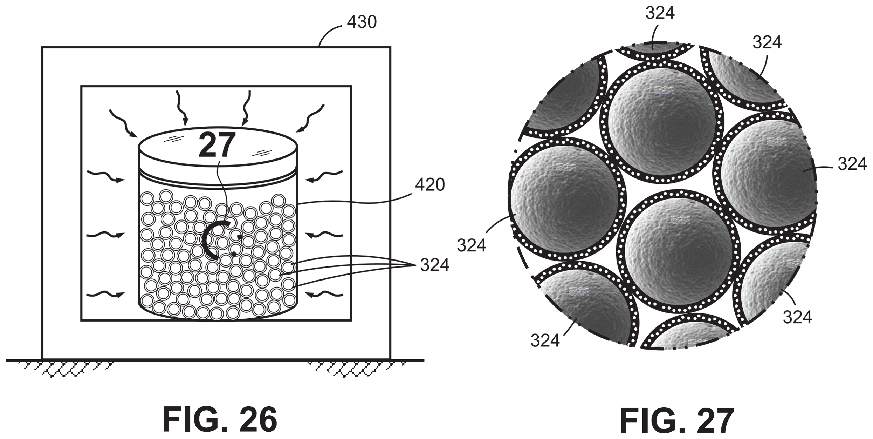

Referring to Figures 26-27, after the tumbling process is complete, step 504 of the method includes allowing the reinforcing binder 320 to cure or solidify in a manner resulting in a plurality of reinforced polymer beads 324, as shown in Figure 27. For cases in which the reinforcing binder 320 is a thermosetting resin, the reinforced polymer beads 324 are cured for a predetermined period of time (e.g., 2 hours) at a predetermined temperature (e.g., 55°C). For example, the sealed container 420 can be transferred to an oven 430 as shown in Figure 26. For cases in which the reinforcing binder 320 is a thermoplastic resin, step 502 of coating the polymer beads 200 with the reinforcing binder 320 may involve heating the reinforcing binder 320 to reduce its viscosity for coating the polymer beads 200. Bead-covering microspheres 300 are added until conglomerates 328 of the binder-coated polymer beads 322 physically break up into individual reinforced polymer beads 324. The reinforced polymer beads 324 can then be tumbled as the thermoplastic resin is allowed to solidify.

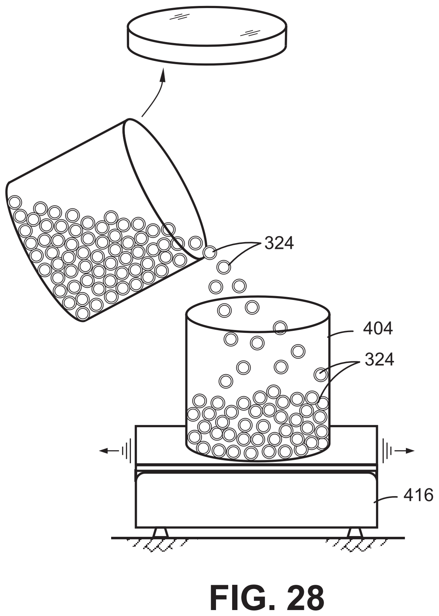

Referring to Figure 28, step 506 of the method includes placing a quantity of the reinforced polymer beads 324 in a mold 404. Although shown having a cylindrical shape, the mold 404 can be provided in any size, shape, or configuration. To improve the packing fraction of the reinforced polymer beads 324 within the mold 404, step 506 can optionally include pouring the reinforced polymer beads 324 into the mold 404 while oscillating or shaking the mold 404. For example, as shown in Figure 20, the mold 404 can be mounted on a mechanical vibrator 416 for vibrating the mold 404 at high frequency (e.g., 1500-2000 rpm) for a predetermined period of time (e.g., 1-3 minutes) during and/or after receiving the reinforced polymer beads 324. Alternatively or additionally, the mold 404 may be agitated by means of tapping the side of the mold 404 during and/or after pouring the reinforced polymer beads 324 into the mold 404.

Referring to Figure 29, for examples in which the configuration (e.g., microsphere diameter, size distribution, microsphere material, etc.) of the sorted quantity 308 of bead-covering microspheres 300 is different than the configuration of the interstitial microspheres 302, the method can include sieving a bulk quantity 306 of interstitial microspheres 302 to obtain a sorted quantity 308 of interstitial microspheres 302 having the desired microspheres size and a size distribution of ±20 um or less, which can also be the size distribution of the bead-covering microspheres 300 as mentioned in step 502. As mentioned above, in any one of the examples, the largest of the interstitial microspheres 302 can be at least 7 times smaller than the smallest of the polymer beads 200 or matrix cavities 206, which can also be the size ratio for the bead-covering microspheres 300 as mentioned in step 502. The microsphere diameter 304 of the interstitial microspheres 302 is preferably 10-110 um. Figure 29 illustrates the sieving of a bulk quantity 306 of interstitial microspheres 302 using a mesh sieve 410 similar to the above-described process for sieving the bulk quantity 306 of bead-covering microspheres 300 in Figure 21.

Referring to Figures 30-31, step 508 of the method includes distributing a sorted quantity 308 of interstitial microspheres 302 throughout the reinforced polymer beads 324 in the mold 404 to obtain a powder bed 330. As shown in Figure 30, step 508 can comprise pouring the sorted quantity 308 of interstitial microspheres 302 into the mold 404 while oscillating the mold 404 using a mechanical vibrator 416. Oscillation of the mold 404 can also occur while sieving the interstitial microspheres 302 over one or more mesh sieves 410 (not shown) so that the sorted quantity of interstitial microspheres 302 fall into the mold 404. The mold 404 can be oscillated or vibrated before, during, and/or after adding the sorted quantity 308 of interstitial microspheres 302 to the powder bed 330 of reinforced polymer beads 324. Oscillation of the mold 404 can continue until the entire free volume of interstices 332 between the reinforced polymer beads 324 is filled with interstitial microspheres 302 in a manner such that the interstitial microspheres 302 are uniformly distributed throughout the reinforced polymer beads 324 as shown in Figure 31. As a means to minimize the amount of void space in the powder bed 330, vacuum pressure (not shown) can be alternately or simultaneously applied to one side of the side of the mold 404 while the interstitial microspheres 302 are added to the powder bed 330 on an opposite side of the mold 404.

In some examples, the sorted quantity 308 of interstitial microspheres 302 are added to the reinforced polymer beads 324 to achieve a 50-74 vol.% of the reinforced polymer beads 324 relative to a combined volume of the interstitial microspheres 302, reinforced polymer beads 324, and remaining space to be filled by the infusing matrix 334. In some examples, the interstitial microspheres 302 can constitute 20-30 vol.% of the combined volume. As mentioned above, 74 vol.% of reinforced polymer beads 324 represents perfect packing of the reinforced polymer beads 324 in the mold 404, while the 50 vol.% of reinforced polymer beads 324 represents random packing of the reinforced polymer beads 324.

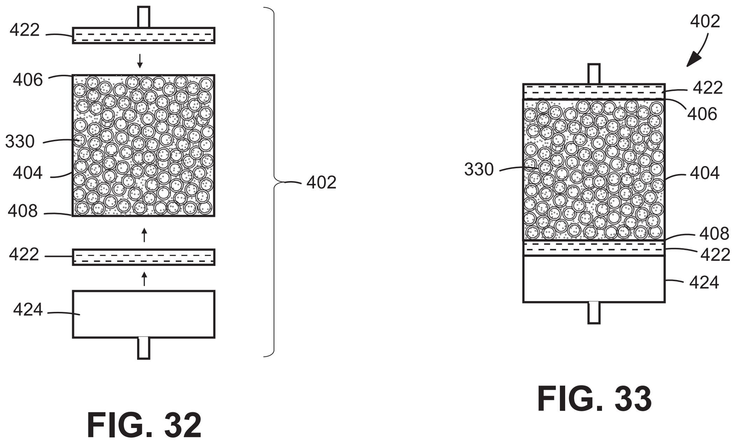

Referring to Figures 32-35, step 510 of the method includes infusing the powder bed 330 in the mold 404 with a polymer infusing matrix 334. As described above, the infusing matrix 334 can be a thermosetting resin or a thermoplastic resin. For cases in which the infusing matrix 334 is a thermosetting resin, the method includes mixing resin with an appropriate amount of hardener to obtain a homogenous resin mixture.

Figures 32-33 show an example of a mold assembly 402 having a porous frit 422 or other porous material placed on the mold top side 406 and a porous frit 422 placed on the mold bottom side 408. The porous frits 422 allow for liquid impregnation of the powder bed 330 in the mold 404. A manifold 424 is mounted on the side of the mold 404 where the infusing matrix 334 is introduced. The manifold 424 is configured to ensure that the infusing matrix 334 is introduced across the entire cross-section of the powder bed 330.

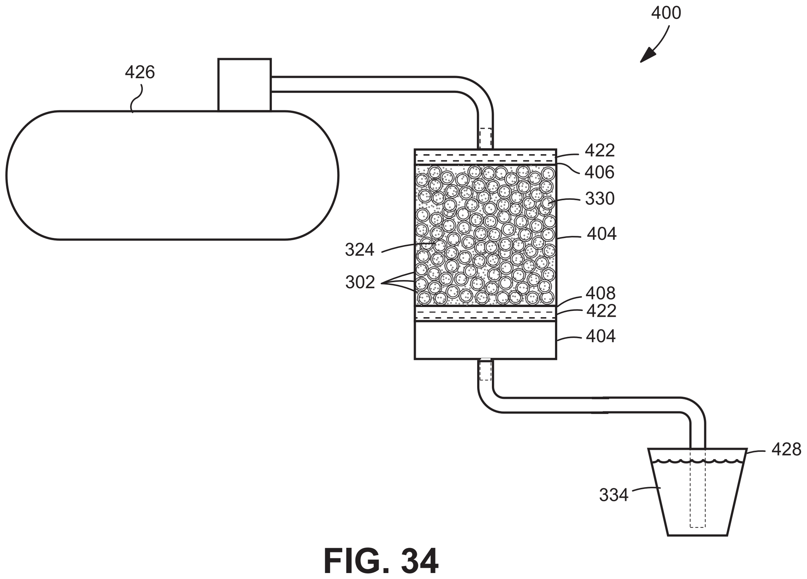

Figure 34 shows an example of a manufacturing system 400 for infusing the powder bed 330 in the mold 404. The manufacturing system 400 includes a resin container 428 containing the resin mixture (i.e., the infusing matrix 334). The resin container 428 is fluidically coupled to the manifold 424. In addition, the manufacturing system 400 includes a vacuum source 426 such as a vacuum pump (not shown), which is fluidly coupled to the mold top side 406. As mentioned above, the powder bed 330 is sealed on both ends of the mold 404 by the porous frits 422, which allows for liquid impregnation of the powder bed 330 with a pore size that is smaller than that of the smallest interstitial microspheres 302, but large enough to allow the infusing matrix 334 to pass through.

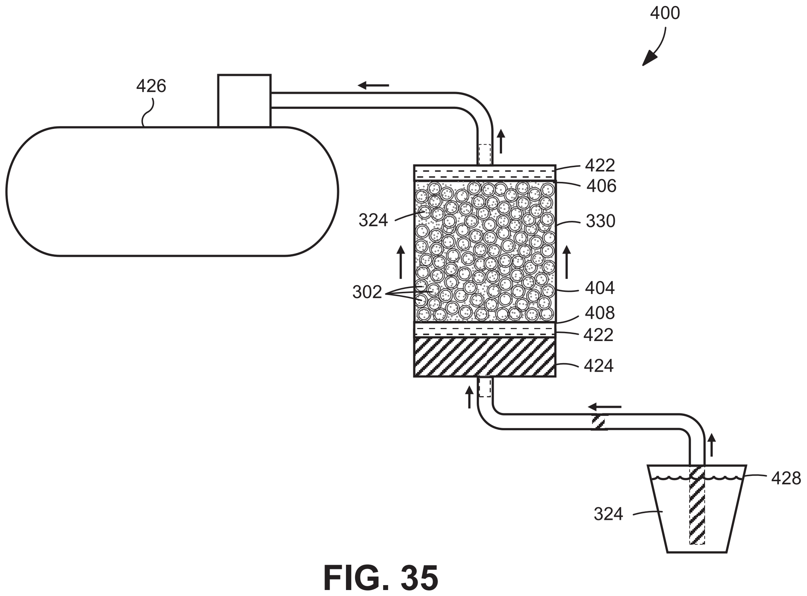

Referring to Figures 34-35, step 510 of infusing the powder bed 330 with the infusing matrix 334 comprises applying vacuum pressure to a side of the mold 404 opposite the side into which the infusing matrix 334 is introduced. In the example shown, infusion is initiated by activating the vacuum source 426 to generate vacuum pressure for drawing the infusing matrix 334 from the resin container 428 in an upward direction into the manifold 424 on the mold bottom side 408, through the porous frit 422, through the powder bed 330, and out of the porous frit 422 on the mold top side 406 as shown in Figure 35. Optionally, positive pressure can be simultaneously applied to the resin container 428 to accelerate the resin infusion process.

In step 510, vacuum pressure is applied for a predetermined amount of time (e.g., 1-3 hours) to debulk the resin-fused powder bed 330 and/or until a modest amount of infusing matrix 334 has exited the mold top side 406 and/or until the entire powder bed 330 is saturated with infusing matrix 334. Advantageously, drawing the infusing matrix 334 in an upward direction (as opposed to a downward direction) through the powder bed 330 improves debulking and removes air bubbles otherwise trapped in the powder bed 330.

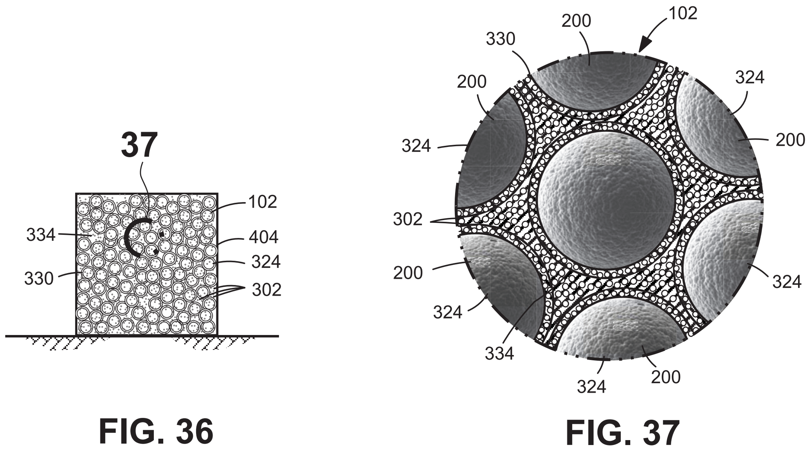

Figure 36 shows the mold 404 after infusion of the infusing matrix 334 into the powder bed 330 of reinforced polymer beads 324 and interstitial microspheres 302, and resulting in the syntactic foam 102 in a pre-cured state. Step 512 of the method includes allowing the infusing matrix 334 in the powder bed 330 to cure (e.g., for thermosetting resin) or solidify (e.g., for thermoplastic resin) in the mold 404. For example, the syntactic foam 102 is allowed to cure at room temperature for a predetermined period of time (e.g., 12 hours). Figure 37 is a magnified view of a portion of the syntactic foam 102 in the pre-cured state in which the polymer beads 200 are generally in their original state having the cellular-like internal structure 204 shown in Figure 5.

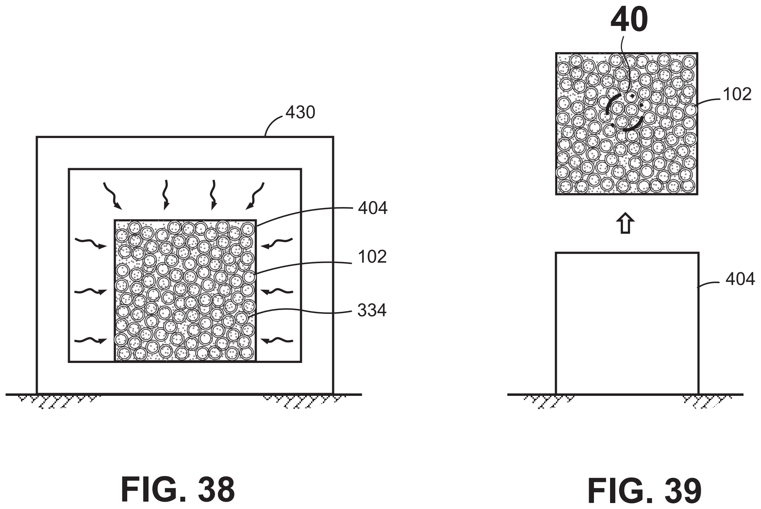

Referring to Figure 38, shown is an example of the mold 404 placed in an oven 430 for final curing of the syntactic foam 102. During final cure, the syntactic foam 102 is heated to an elevated temperature (e.g., 135°C) which is maintained for a short period of time (e.g., 2 hours). After final cure and cool down, the syntactic foam 102 is removed from the mold 404 as shown in Figure 39.

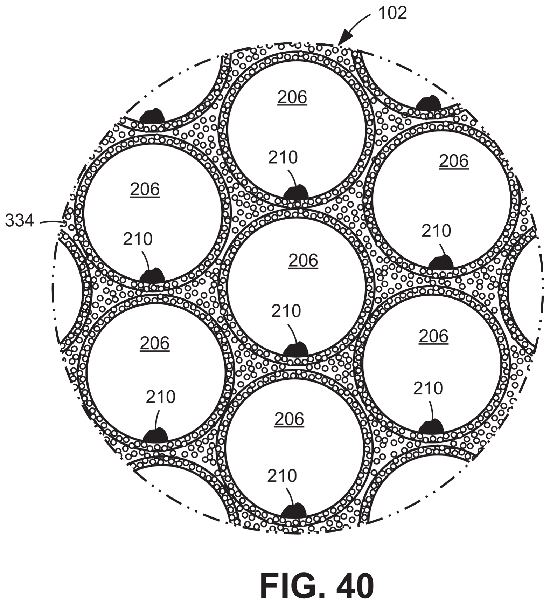

Figure 40 is a magnified view of a portion of post-cured syntactic foam 102 of Figure 39 showing a plurality of matrix cavities 206 in the infusing matrix 334. As described above, each matrix cavity 206 contains a polymer particle 210 resulting from shrinkage of the polymer beads 200 (Figure 37) due to the elevated temperatures associated with the final curing process. The above-described steps are preferably performed in a manner to result in a post-cured syntactic foam 102 having a wall thickness 336 (Figures 3 and 10) that is 4 to 15 times the diameter of the largest of the bead-covering microspheres 300 and the interstitial microspheres 302. As described above, wall thickness 336 is the narrowest point between each adjacent pair of polymer beads 200 or matrix cavities 206 in the syntactic foam 102.

In the post-cured state, the syntactic foam 102 can be shaped as necessary into a foam product 104. For example, the syntactic foam 102 can be machined into a foam product 104 that is shaped complementary to the shape of the interior pockets and/or exterior contours of a subsea application, such as an unmanned undersea vehicle 100 (e.g., Figure 1).

Advantageously, the presently disclosed syntactic foam 102 is capable of withstanding hydrostatic pressures of greater than 4500 psi (service depth of greater than 7500 ft) with a density of less than 0.40 g/cm³, and which represents a significant improvement upon state-of-the-art foam systems. The improved performance characteristics of the syntactic foam 102 are partly the result of controlling the particle size distribution of the bead-covering microspheres 300, in combination with controlling the particle size distribution of the interstitial microspheres 302. In addition, several steps of the manufacturing process enable the ability to achieve the low density of the syntactic foam 102. For example, adding the sorted quantity 308 of bead-covering microspheres 300 to the binder-coated polymer beads 322 while physically agitating (e.g., with a stir rod 412) the polymer beads 200 during rotation of the angled tumbler 418 as shown in Figure 22 results in an improvement in hydrostatic crush strength of the syntactic foam 102 with a minimal increase (e.g., a 0.02-0.03 g/cm³) in density. In addition, by first filling the mold 404 with reinforced polymer beads 324, shaking the mold 404 to achieve a tightly packed state (Figure 28), and then adding interstitial microspheres 302 (Figure 30), the polymer beads 200 are prevented from moving away from each other. Preventing the polymer beads 200 from moving away from each other when adding the interstitial microspheres 302 results in a lower density syntactic foam 102 then can be achieved by mixing together the reinforced polymer beads 324, interstitial microspheres 302, and infusing matrix 334, and then pouring the bead-microsphere-matrix mixture into a mold.

Many modifications and other versions and examples of the disclosure will come to mind to one skilled in the art to which this disclosure pertains having the benefit of the teachings presented in the foregoing descriptions and the associated drawings. The versions and examples described herein are meant to be illustrative and are not intended to be limiting or exhaustive. Although specific terms are employed herein, they are used in a generic and descriptive sense only and not for purposes of limitation. Functionally equivalent methods and apparatuses within the scope of the disclosure, in addition to those enumerated herein, are possible from the foregoing descriptions. Such modifications and variations are intended to fall within the scope of the appended claims. The present disclosure is to be limited only by the terms of the appended claims, along with the full scope of equivalents to which such claims are entitled.

Example 1. A syntactic foam, comprising:
a polymer infusing matrix;
a plurality of at least one of polymer beads and matrix cavities in one or more sizes distributed throughout the infusing matrix, each having a width of 0.5-50 mm and surrounded by a polymer reinforcing binder containing bead-covering microspheres, and each of the matrix cavities is partially occupied by a polymer particle;
a quantity of interstitial microspheres distributed within the infusing matrix amongst the polymer beads or matrix cavities; and
wherein the bead-covering microspheres have a size distribution of ±20 um or less.

Example 2. The syntactic foam of Example 1, wherein the interstitial microspheres have a size distribution of ±20 um or less.

Example 3. The syntactic foam of one of Examples 1 or 2, wherein the bead-covering microspheres and the interstitial microspheres have a density of less than 0.6 g/cm³.

Example 4. The syntactic foam of any one of Examples 1 to 3, wherein the bead-covering microspheres and/or the interstitial microspheres are comprised of at least one of the following materials: glass, ceramic, polymer.

Example 5. The syntactic foam of any one of Examples 1 to 4, wherein at least one of the reinforcing binder and the infusing matrix is comprised of at least one of the following thermosetting or thermoplastic materials: epoxy, epoxy-amine, epoxy-anhydride, silicone, vinyl ester, polyurethane, polyurea, polyester, cyclic olefin, phenolic resin, polyimide, polybenzimidazole, polyetherimide.

Example 6. A method of manufacturing a syntactic foam (102), comprising:
coating a quantity of polymer beads (200) with a polymer reinforcing binder (320) to form binder-coated polymer beads (200) containing a sorted quantity (308) of bead-covering microspheres (300);
allowing the reinforcing binder (320) to cure or solidify in a manner resulting in a plurality of individual reinforced polymer beads (324);
placing a quantity of the reinforced polymer beads (324) in a mold (404);
distributing a sorted quantity (308) of interstitial microspheres (302) throughout the reinforced polymer beads (324) in the mold (404) to obtain a powder bed (330);
infusing the powder bed (330) in the mold (404) with a polymer infusing matrix (334);
allowing the infusing matrix (334) in the powder bed (330) to cure of solidify in the mold (404), thereby resulting in the syntactic foam (102); and
wherein the polymer beads (200) are provided in one or more sizes each having a width of 0.5-50 mm, and the bead-covering microspheres (300) have a size distribution of ±20 um or less.

Example 7. The method of Example 6, further comprising providing the reinforced polymer beads, the interstitial microspheres, and the infusing matrix in the following volume percentages:
50-74 vol.% of the reinforced polymer beads, 20-30 vol.% of the interstitial microspheres, and the remainder as the infusing matrix.

## Claims

1. A composition for a syntactic foam (102), comprising:
a quantity of polymer beads (200) in one or more sizes, and each polymer bead (200) has a width of 0.5-50 mm;
a polymer reinforcing binder (320) configured to coat the polymer beads (200);
a quantity of bead-covering microspheres (300) at least partially embeddable in the reinforcing binder (320), and the reinforcing binder (320) is configured to be cured or solidified in a manner resulting in a plurality of individual reinforced polymer beads (324);
a quantity of interstitial microspheres (302) configured to be distributed within a powder bed (330) of the reinforced polymer beads (324);
a polymer infusing matrix (334) configured to be infused into the powder bed (330) of the reinforced polymer beads (324) and the interstitial microspheres (302), and the infusing matrix (334) is configured to be cured or solidified in a manner resulting in a syntactic foam (102); and
wherein the bead-covering microspheres (300) have a size distribution of ±20 um or less.

2. The composition of Claim 1, wherein the interstitial microspheres (302) have a size distribution of ±20 um or less.

3. The composition of any one of Claims 1 and 2, wherein the bead-covering microspheres (300) and/or the interstitial microspheres (302) have a width of 10-110 um.

4. The composition of any one of Claims 1 to 3, wherein the bead-covering microspheres (300) and the interstitial microspheres (302) have a density of less than 0.6 g/cm³.

5. The composition of any one of Claims 1 to 4, wherein at least one of the quantity of bead-covering microspheres (300) and the quantity of interstitial microspheres (302) are comprised of at least one of the following materials: glass, ceramic, polymer.

6. The composition of any one of Claims 1 to 5, wherein the polymer beads (200) are comprised of at least one of the following thermoplastic materials: expanded polystyrene foam, expanded polypropylene foam, low density polyethylene foam, polyurethane foam.

7. The composition of any one of Claims 1 to 6, wherein the polymer beads (200) have a true density of less than 0.1 g/cm³.

8. The composition of any one of Claims 1 to 7, wherein at least one of the reinforcing binder (320) and the infusing matrix (334) is comprised of at least one of the following thermosetting or thermoplastic materials: epoxy, epoxy-amine, epoxy-anhydride, silicone, vinyl ester, polyurethane, polyurea, polyester, cyclic olefin, phenolic resin, polyimide, polybenzimidazole, polyetherimide.

9. A syntactic foam (102), comprising:
a polymer infusing matrix (334);
a plurality of at least one of polymer beads (200) and matrix cavities (206) in one or more sizes distributed throughout the infusing matrix (334), each having a width of 0.5-50 mm and surrounded by a polymer reinforcing binder (320) containing bead-covering microspheres (300), and each of the matrix cavities (206) is partially occupied by a polymer particle (210);
a quantity of interstitial microspheres (302) distributed within the infusing matrix (334) amongst the polymer beads (200) or matrix cavities (206); and
wherein the bead-covering microspheres (300) have a size distribution of ±20 um or less.

10. The syntactic foam (102) of Claim 9, wherein a wall thickness (336) of a combination of the reinforcing binder (320) and the infusing matrix (334) at a narrowest point between at least 90 percent of adjacent pairs of polymer beads (200) or matrix cavities (206) in the syntactic foam (102) is 4 to 15 times the diameter of the largest of the bead-covering microspheres (300) and the interstitial microspheres (302).

11. The syntactic foam (102) of any one of Claims 9 and 10, comprising 50-74 vol.% of reinforced polymer beads (324) or reinforced matrix cavities (326), 20-30 vol.% of the interstitial microspheres (302), and the remainder as the infusing matrix (334).

12. A method of manufacturing a syntactic foam (102), comprising:
coating a quantity of polymer beads (200) with a polymer reinforcing binder (320) to form binder-coated polymer beads (200) containing a sorted quantity (308) of bead-covering microspheres (300);
allowing the reinforcing binder (320) to cure or solidify in a manner resulting in a plurality of individual reinforced polymer beads (324);
placing a quantity of the reinforced polymer beads (324) in a mold (404);
distributing a sorted quantity (308) of interstitial microspheres (302) throughout the reinforced polymer beads (324) in the mold (404) to obtain a powder bed (330);
infusing the powder bed (330) in the mold (404) with a polymer infusing matrix (334);
allowing the infusing matrix (334) in the powder bed (330) to cure of solidify in the mold (404), thereby resulting in the syntactic foam (102); and
wherein the polymer beads (200) are provided in one or more sizes each having a width of 0.5-50 mm, and the bead-covering microspheres (300) have a size distribution of ±20 um or less.

13. The method of Claim 12, further comprising:
sieving a bulk quantity (306) of at least one of the bead-covering microspheres (300) and the interstitial microspheres (302) to obtain the sorted quantity (308) having a particle size distribution of ±20 um or less.

14. The method of any one of Claims 12 and 13, wherein the step of coating the polymer beads (200) with the reinforcing binder (320) comprises:
placing the polymer beads (200) in a tumbler;
pouring the reinforcing binder (320) over the polymer beads (200) until fully coated, thereby forming binder-coated polymer beads (200); and
adding the bead-covering microspheres (300) to the binder-coated polymer beads (200) while rotating the tumbler until conglomerates (328) of the binder-coated polymer beads (200) physically break up into individual reinforced polymer beads (324).

15. The method of any one of Claims 12 to 14, comprising performing the steps of coating the polymer beads (200) with bead-covering microspheres (300), placing the reinforced polymer beads (324) in the mold (404), and distributing the interstitial microspheres (302) throughout the reinforced polymer beads (324) in a manner to result in the syntactic foam (102) in which:
a wall thickness (336) of a combination of the reinforcing binder (320) and the infusing matrix (334) at a narrowest point between at least 90 percent of adjacent pairs of polymer beads (200) in the syntactic foam (102) is 4 to 15 times the diameter of the largest of the bead-covering microspheres (300) and the interstitial microspheres (302).
